# EUROPEAN PATENT APPLICATION

(11) **EP 1 372 281 A2**
(43) Date of publication of application: **17.12.2003**
(21) Application number: 03012187.5
(22) Date of filing: 04.06.2003
(51) Int. Cl.: H04B 10/213

(54) **Optical ring network system having a plurality of node apparatuses connected in a ring**

(30) Priority: 11.06.2002 JP 2002170186
(71) Applicant: FUJITSU LIMITED, Kawasaki-shi, Kanagawa 211-8588 (JP)
(72) Inventor: Miyata, Hideyuki, Fujitsu Limited, Kawasaki-shi, Kanagawa 211-8588 (JP); Tomofuji, Hiroaki, Fujitsu Limited, Kawasaki-shi, Kanagawa 211-8588 (JP); Onaka, Hiroshi, Fujitsu Limited, Kawasaki-shi, Kanagawa 211-8588 (JP)
(74) Representative: HOFFMANN EITLE

(57) **Abstract**

An optical network ensures substantially same received optical powers even if optional optical paths are connected between node apparatuses in a ringed optical network, and to provide a node apparatus for use in the network. The optical ring network system includes a plurality of node apparatuses each sending out wavelength division multiplexed optical signals; an optical transmission line connecting the plurality of node apparatuses in a ring; and at least one optical amplifier disposed on the optical transmission line, wherein the sending power of optical signals to be inserted at each of the plurality of node apparatuses is set such that the received levels of the optical signals sent out from the plurality of node apparatuses and received at the input of the optical amplifier become equal.

## Description

### BACKGROUND OF THE INVENTION

### 1. Field of the Invention

The present invention relates to an optical ring network system having a plurality of node apparatuses connected in a ring, and to a node apparatus for use in the network system.

### 2. Description of the Related Arts

The explosive growth in the demand for data communications mainly for Internet traffic requires backbone networks to increase the capacity and to be adapted for super long distance communications. Also, as services used by users are becoming widely diversified, it is now required to achieve an economical network, which assures high reliability and flexibility.

The current technologies dramatically advance the trend of large capacity and super long distance communications by means of the Wave Division Multiplexing (WDM) transmission technology and the optical amplifier technology so that transmission line costs can be reduced.

However, provision for the increasing throughput of node apparatuses placed on both ends of a transmission apparatus, and cost reduction is not speedy, compared to the progress of large capacity and low-costing transmission line.

The increase of the signal processing capability of a node apparatus having a function for dividing transmission signals among users and low costing are indispensable for operating and building-up an efficient network. If the information processing capability of the node apparatus is increased by means of the conventional electro-optical conversion or electric switch, node costs are increased and scale is increased.

Due to the afore-mentioned background, an Optical Add Drop Multiplexing (OADM) apparatus and an Optical Cross Connecting (OXC) apparatus are under development, wherein a large-scaled electronic circuit is replaced with an optical part and a variety of processing are carried out on an optical path-to-path basis within an optical wavelength area, in order to increase the throughput of the node apparatus, and to achieve an economical and small-sized node apparatus.

Many of node apparatuses having the OADM function are used in networks of 40-100 km span connecting cities (called Metro) which is smaller than a trunk line-based network, or in networks, which are further smaller than that (called access net) .

Each node apparatus allows an optical signal to pass through within an optical wavelength area, or branches and inserts the required optical wavelength. By this operation, an optical path can be strung between node apparatuses, and signal connection can be made between desired users.

As the network architecture for the above-mentioned Metro or Access nets, a ring configuration is usually applied. In order to reduce transmission line costs in ring networks of several tens of kilometers used in the Metro or Access net, such configurations are proposed; a configuration which optionally introduces an in-line amplifier (wavelength division multiplexing optical amplifier) within a transmission line ring; a configuration which removes an expensive in-line amplifier, or a configuration which limits the number of in-line amplifiers to several units, even if it employs the same.

In such a case, there may be some sections where node apparatuses are mutually connected not through an optical amplifier. If there is an optical amplifier between node apparatuses, a transmitting signal repeats attenuation and amplification, so that an optical signal arrives at each node apparatus keeping substantially the same optical power.

On the other hand, if no optical amplifier is provided between node apparatuses, an optical signal arriving at a specified node apparatus after passing through each node is transmitted while attenuating as a result of transit loss at each node apparatus, and transmission line loss.

Therefore, the optical power of an optical signal varies significantly when the optical signal arrives at a specified node apparatus, depending on conditions; whether the optical signal arrives at a distant or a near-by node apparatus, or after passing through a different route.

In such a case, signals cannot be received due to other reasons than the limitation by the OSNR (optical signal to noise ratio). Also, apparatus costs are increased.

### SUMMARY OF THE INVENTION

It is therefore an object of the present invention to provide an optical network ensuring substantially the same received optical powers even if optional optical paths are connected between node apparatuses in a ringed optical network, and to provide a node apparatus for use in the network.

In order to achieve the above object, according to a first aspect of the present invention there is provided an optical ring network system comprising a plurality of node apparatuses each sending out wavelength division multiplexed optical signals; an optical transmission line connecting the plurality of node apparatuses in a ring; and at least one optical amplifier disposed on the optical transmission line; wherein the sending power of optical signals to be inserted at each of the plurality of node apparatuses is set such that the received levels of the optical signals sent out from the plurality of node apparatuses and received at the input of the optical amplifier become equal.

In order to attain the above object, according to a second aspect of the present invention there is provided an optical ring network system comprising a plurality of node apparatuses each sending out wavelength division multiplexed optical signals; an optical transmission line connecting the plurality of node apparatuses in a ring; and an optical amplifier included in any of the plurality of node apparatuses, the optical amplifier being connected to the optical transmission line; wherein the sending power of optical signals to be inserted at each of the plurality of node apparatuses is set such that the received levels of the optical signals sent out from the plurality of node apparatuses and received at the input of the optical amplifier become equal.

Preferably, each of the plurality of node apparatuses includes control means for calculating a deviation and controlling the sending power of optical signals so that the calculated deviation becomes zero, the calculated deviation being the difference between the received optical signal level of a corresponding node apparatus connected via a path to the each of the plurality of node apparatuses, notified from the corresponding node apparatus, and the sending out level of the optical signal sent out.

In order to accomplish the above object, according to a third aspect of the present invention there is provided a node apparatus in an optical ring network which include a plurality of node apparatuses connected in a ring via an optical transmission line, the optical ring network having an optical relay amplifier disposed on a segment between the adjacent node apparatuses, wherein the node apparatus comprises means for setting the sending power of optical signals to be inserted at each of the plurality of node apparatuses such that the receiving levels of the optical signals sent out from the plurality of node apparatuses and received at the input of the optical amplifier become equal.

In order to achieve the above object, according to a fourth aspect of the present invention there is provided a node apparatus in an optical ring network which include a plurality of node apparatuses connected in a ring via an optical transmission line, at least one of the plurality of node apparatuses having an optical relay amplifier connected to the optical transmission line, wherein the node apparatus comprises means for setting the sending power of optical signals to be inserted at each of the plurality of node apparatuses such that the receiving levels of the optical signals sent out from the plurality of node apparatuses and received at the input of the optical amplifier become equal.

The wavelength of the wavelength division multiplexed optical signal is preferably fixed. The wavelength of the wavelength division multiplexed optical signal may adaptively be variable. The node apparatus may comprise control means for calculating a deviation and controlling the sending power of optical signals so that the calculated deviation becomes zero, the calculated deviation being the difference between the received optical signal level of a corresponding node apparatus connected via a path thereto, notified from the corresponding node apparatus, and the sending out level of the optical signal sent out.

### BRIEF DESCRIPTION OF THE DRAWINGS

The above and other objects, aspects, features and advantages of the present invention will become more apparent from the following detailed description when taken in conjunction with the accompanying drawings, in which:
Fig: 1 shows an optical ring network in a schematic form;
Fig. 2 is an explanatory view of an embodiment of the present invention;
Fig. 3 is an explanatory view of the mechanism for obtaining at an input A of an optical amplifier 100, substantially equal inserted signal powers from node apparatuses;
Fig. 4 shows a variant of the embodiment of Fig. 2;
Fig. 5 shows by way of example the configuration of the node apparatus for controlling the input level of optical signals inserted at each node apparatus, by use of a monitor control signal SV; and
Fig. 6 is an explanatory view of adjustment of sending out levels of optical signals having individual channel wavelengths, by use of the SV signal generated by a SV processing circuit 15 included in the node apparatus of Fig. 5.

### DESCRIPTION OF THE PREFERRED EMBODIMENTS

A preferred embodiment of the present invention will now be described with reference to the accompanying drawings. It is to be noted that the shown embodiment is given only for the purpose of understanding of the invention and that the application of the invention is not limited thereto.

Prior to the description of the embodiment of the present invention, in order to help the understanding of the present invention, a case will hereinbelow be described where optical signals cannot be received because of reasons other than the limitation by the OSNR, caused by significant variances in the optical power when the optical signal reaches a desired node apparatus.

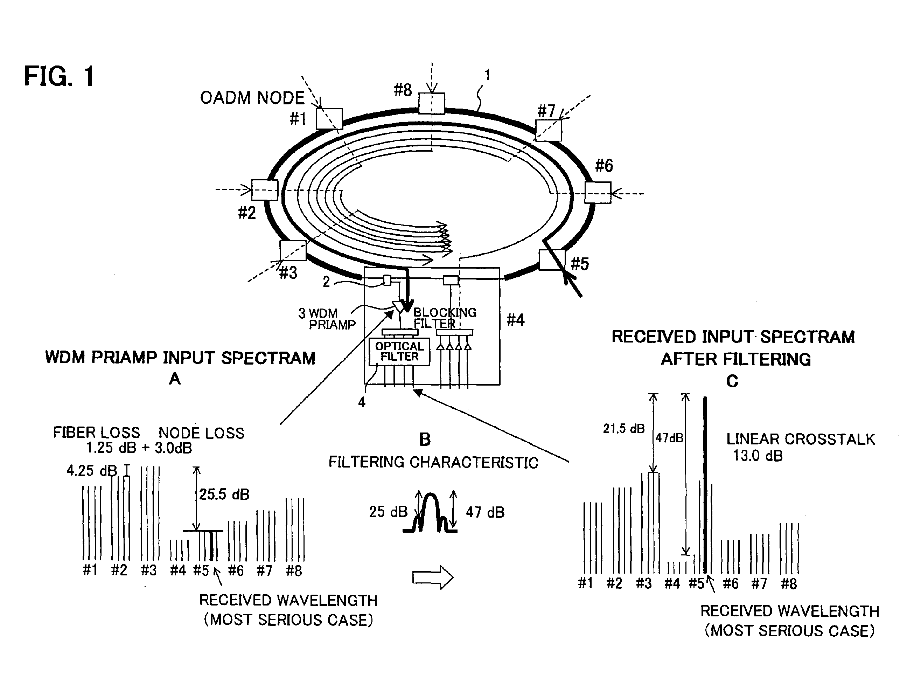

Fig. 1 is a diagram in schematic form showing an optical ring network. On an optical transmission line 1, a plurality of node apparatuses (#1-#8) are provided. A configuration of a node apparatus #4 is shown in the figure as a representative of all node apparatuses, since the configuration of each node apparatus is the same.

Using a branch apparatus 2, each node apparatus branches optical signals of wavelength division multiplexing optical signal groups #1-#8 inserted by node apparatuses (#1-#8) which received the optical signals. The wavelength division multiplexing optical signals branched by the branch apparatus 2 are amplified through a WDM pre-amplifier 3, and then inputted to an optical filter 4, so that only a specified wavelength signal is extracted.

A wavelength division multiplexed optical signal transmitted by an optical transmission line 1 suffers losses at the optical transmission line 1 and the node apparatus through which the optical signal is transmitted. Therefore, when a loss caused by the optical transmission line 1 within the node adjacent section is supposed to be 1.25 dB, and an insertion loss by one node apparatus to be 3.0 dB, the optical signal of the wavelength division multiplexing optical signal groups #1-#8 has a spectrum as shown in Fig. 1A.

In the spectrum of the wavelength division multiplexing optical signal as shown in Fig. 1A, each of the wavelength division multiplexing optical signal groups #1-#8 to be inserted by each node apparatus is supposed to have a plurality of wavelength signals (4 wavelengths are shown in the figure).

Furthermore, in the optical signal with the spectrum shown in Fig. 1A to be received by a node apparatus #4, the input level of the wavelength division multiplexing optical signal inserted by a node apparatus #5 is the lowest, and a tilt is produced where a deviation from the maximum level (the optical signal level inserted by a node apparatus #3 becomes 25.5 dB.

In other words, the input levels of the wavelength division multiplexing signal groups inserted by each node apparatus varies depending on the number of transmission lines, or number of node apparatuses through which the signal is transmitted to the destination node apparatus.

An optical filter 4 for cutting a specified single wave out of the received wavelength division multiplexing optical signal has a filtering characteristic as shown in Fig. 1B. The amounts of attenuation produced by such an attenuating characteristic of the filtering are 25 dB for the channel adjacent to the channel through which the center frequency is transmitted, and 47 dB for the channel located on the further outer side, respectively. The suppression ratio for the channel adjacent to said specified single wave and non-adjacent channel is finite.

Accordingly, to the input optical signal spectrum as shown in Fig. 1A, when the optical signal is transmitted through the optical filter 4 having a characteristic as shown in Fig. 1B, the optical signal spectrum at the input portion of a receiver, which is not noted in the drawing, connected to the output side of the optical filter 4 is as shown in Fig. 1C.

In Fig. 1C, there is a difference of 25 dB between the level (shown by a heavy line) of the optical signal having a specified wavelength, and the level of the optical signal for the adjacent channel, due to the filter characteristic shown in Fig. 1B. However, at the input of the pre-amplifier 3, the level of the optical signal having the specified wavelength inserted from the node apparatus #5 (heavy lines) is lower than the level of the optical signal in a group inserted from the node apparatus #3 by 25.5 dB. Accordingly, in the output of the filter 4, difference is 21.5 dB as shown in Fig. 1C.

The power ratio of the power of the signal which should be extracted, to the total power of the other channels is called "linear crosstalk", and in order to communicate the extracted signal without degradation, distinguishing it from other signals, the level difference must be usually 20 dB or greater. However, in an example shown in Fig. 1C, the linear crosstalk is 13.0 dB, and in this case, the optical signal (heavy line) having a specified wavelength cannot be received without degradation.

In reality, the filtering characteristic of 25 dB for the adjacent channel, and 47 dB for other channels is hard to achieve, and the value of the linear crosstalk becomes much more higher than that. If a deviation (tilt) of the received optical power is large, in order to receive even the smallest optical signal without fail, the total output power of the pre-amplifier 3 for amplifying a wavelength division multiplexing optical signal provided in front of the optical filter 4 must be increased. However, in this case, an expensive optical amplifier is required. Also, signals cannot be received when the signal is not within the input dynamic range of the receiver, even if the output power of the optical amplifier is the greatest.

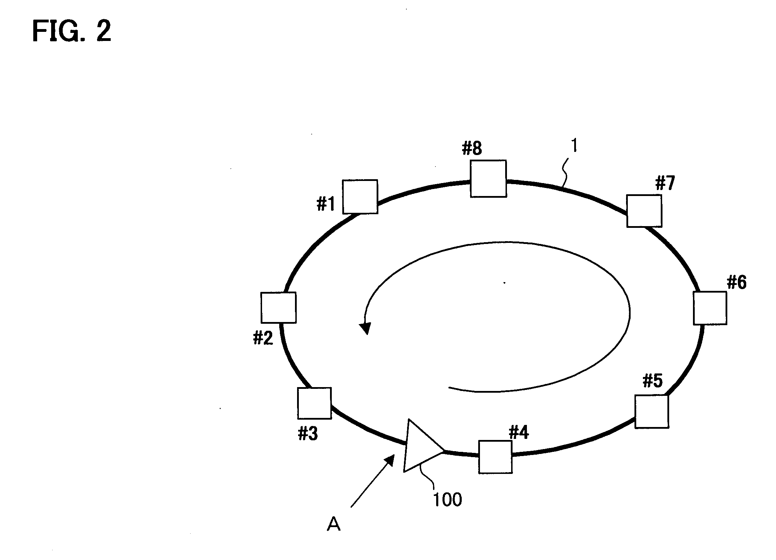

The present invention is to solve the inconvenience in receiving signals. Fig. 2 is a diagram for describing an embodiment according to the present invention.

An embodiment according to the present invention is characterized in that (1) an optical amplifier 100 is provided within a transmission ring including an optical transmission line 1 connected in a ring. Furthermore, (2) optical signal powers inserted from each node apparatus are set so that the powers are substantially the same at the input A of the optical amplifier 100.

In order to reduce costs of each node apparatus, all node apparatuses are not required to provide an optical amplifier for amplifying all optical signals within the transmission line.

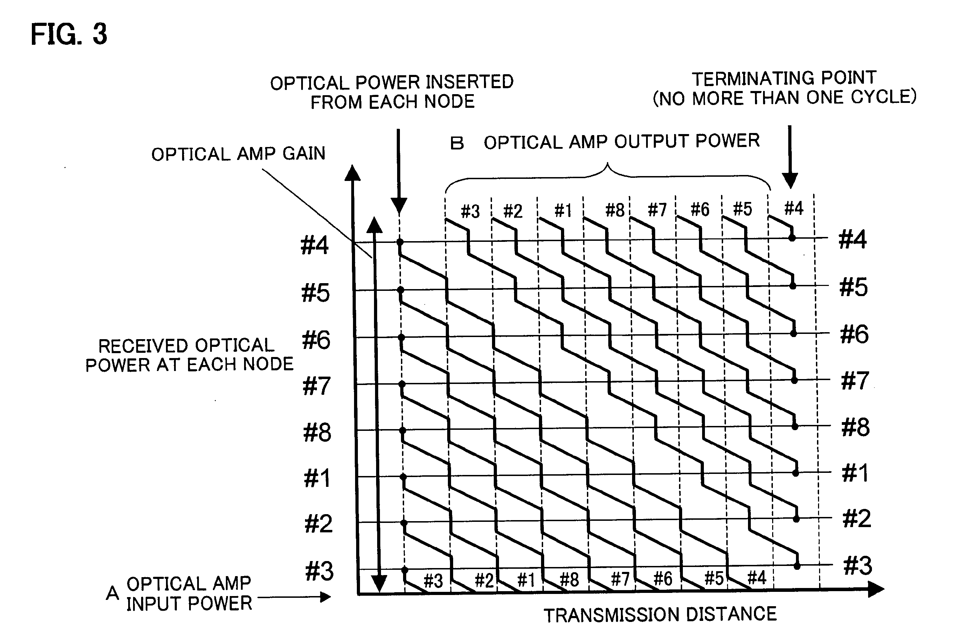

Fig. 3 is a diagram for describing the method for setting optical signal powers inserted from each node apparatus to be substantially the same at the input A of the optical amplifier 100.

In Fig. 3, the horizontal axis represents the received powers of the optical signal sent from the other node apparatuses at each node apparatus corresponding to the transmission line distance. The lowest power level shown on the vertical axis denotes the input optical signal power of the optical amplifier 100, and by means of setting the powers of the optical signals inserted by each node apparatus, the input optical signal powers of the optical amplifier 100 are substantially the same.

Therefore, in Fig. 3, the optical signal is amplified to the maximum power and outputted, even the optical signal is inserted and sent by any node apparatus, as shown by the output power B of the optical amplifier 100.

In addition, in an example shown in Fig. 2, the optical amplifier 100 is provided between the node apparatuses #3 and #4 located at some midpoint in the transmission line 1. Therefore, in Fig. 3, as to the transmission distance shown on the horizontal axis, the distance of the node apparatus #3 is the shortest, and the node apparatus #4 is the longest. From this figure, it can be understood that the optical signal levels, even the optical signals inserted from the other node apparatuses, are set so that all the optical signal levels are substantially the same at the input of the optical amplifier 100.

Accordingly, to the optical signal which should be extracted, a linear crosstalk of 20 dB or higher can be satisfied, even if by using a normal filter, and the optical signal which should be extracted can be received.

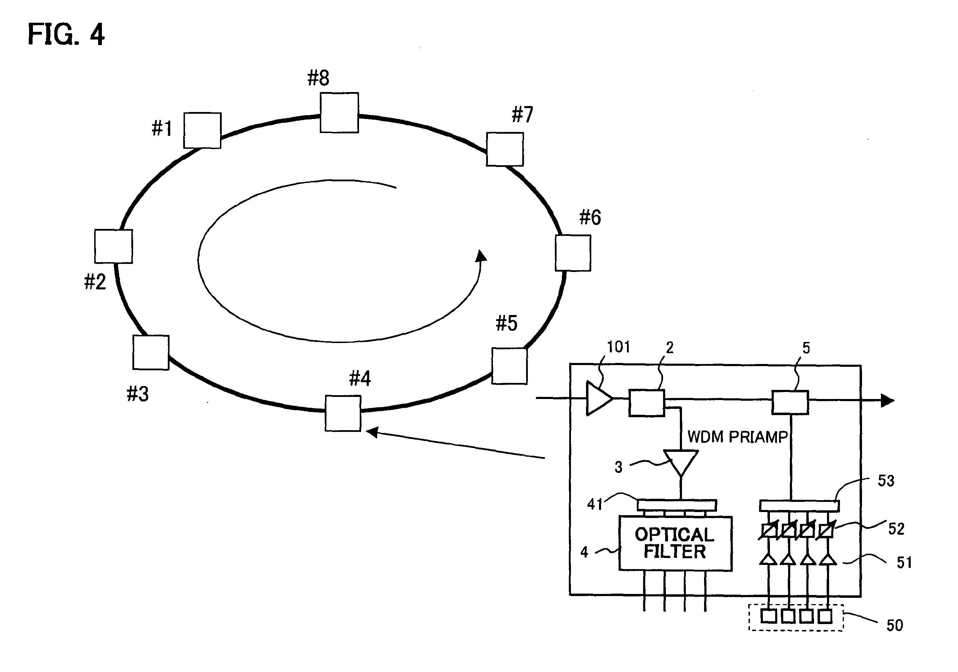

Fig. 4 shows an altered example of the embodiment shown in Fig. 2, and in this configuration, any of the node apparatuses includes an optical amplifier 101, which is equivalent to the optical amplifier 100, placed at some midpoint in the optical transmission line 1.

In such a configuration of the type described, setting is made so that the levels of the optical signals inserted from each node apparatus are equal at the input of the optical amplifier 101 in the node apparatus, as described in Fig. 3.

In a configuration of a node apparatus shown in Fig. 4, representative of which is the node apparatus #4, an optical signal generated and inserted by a laser diode 50 is amplified by an optical amplifier 51 to a specified level. The output of the optical amplifier 51 is inputted to an optical coupler 53, where optical signals having a wavelength to be inserted is further attenuated by a variable optical attenuator 52.

The optical signals having the wavelength to be inserted are combined together by the optical coupler 53 and sent out to the node apparatus on the next stage.

The wavelength of the optical signal, which is to be inserted by the node apparatus, can be set to any wavelength, by means of using a wavelength variable laser diode instead of the laser diode 50.

In Fig. 4, an optical coupler 41 provided between a pre-amplifier 3 and optical filter 4 splits the received optical power into 4 corresponding to 4 wavelengths and inputs to the optical filter 4.

As previously described referring to Fig. 3, with respect to the input level of the optical amplifier 100 provided on the optical transmission line 1, or the optical amplifier 101 provided in the node apparatus, according to the present invention, the levels of the optical signals inserted from each node apparatus must be equal.

The setting of the input power levels for the optical signals inserted by each node apparatus in order to meet the above-mentioned purpose can be made for each node apparatus when constructing a network.

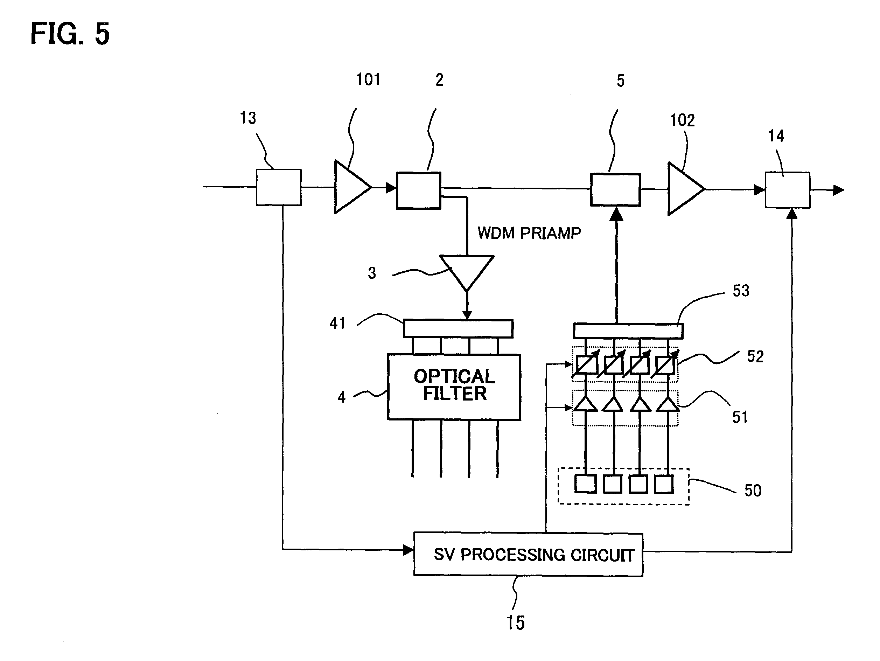

Alternatively, the input power level can be set adaptively by using a monitor control signal SV. Fig. 5 is a diagram showing a configuration of a node apparatus for controlling the input power level of the optical signals inserted by each node apparatus, by means of using the monitor control signal SV.

In Fig. 5, a basic configuration of a node apparatus is the same as the node configuration shown in Fig. 4. The node configuration is characterized by comprising a separator circuit 13 for multi-separating an optical control signal (OSC) sent from the node apparatus on the previous stage provided on the input side, and a monitor signal (SV) processing circuit 15 for processing the optical control signal (OSC) extracted by the separator circuit 13.

Furthermore, on the output side of an optical coupler 5, an OSC insertion unit 14 is provided, for combining the optical control signal (OSC) outputted from the monitor signal (SV) processing circuit 15 with the optical signal which is wavelength division multiplexed by the optical coupler 5.

The optical control signal (OSC) is separated from the wavelength division multiplexed optical signal to be inputted by the separator circuit 13 for multi-separating the optical control signal (OSC), and the separated optical control signal (OSC) is guided to the SV processing circuit 15.

The SV processing circuit 15 detects a received power level notice for an optical signal from a node apparatus, where a path is pre-set by the inputted optical control signal (OSC) , and calculates a difference between a sending level of an optical signal to be inserted by the node apparatus and the informed received power level, so that a SV signal is generated for adjusting the sending level of the optical signal by a variable optical attenuator 52.

The SV processing circuit 15 multiplexes the optical control signal (OSC) transferred from the previous stage with the output of the optical coupler 12, at the OSC insertion unit 14, and sends out to the node apparatuses on the next and later stages.

In Fig. 5, a receiving signal amplifier 101, and an output amplifier 102 are provided, if required.

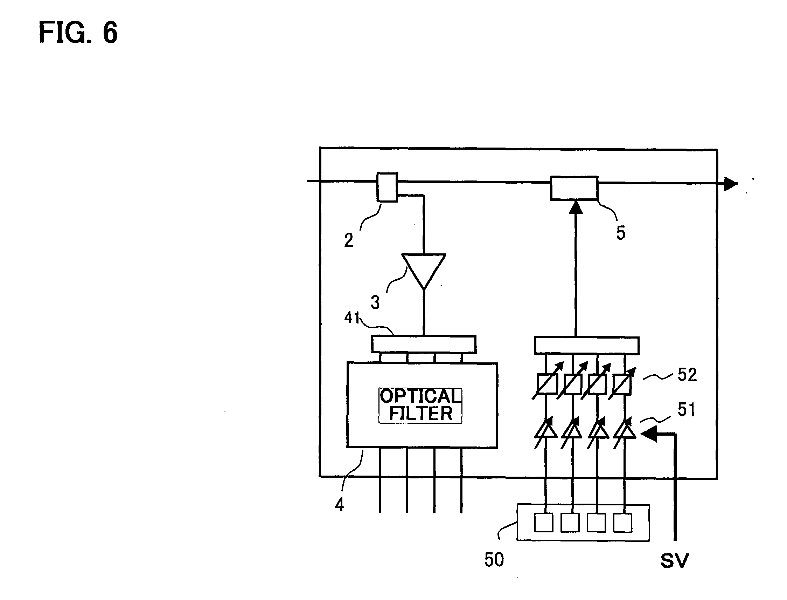

Fig. 6 is a diagram for describing the adjustment of a sending power level for an optical signal having each channel wavelength inserted to both or either one of the output variable optical amplifier 51 or variable optical attenuator 52, by a SV signal generated by the SV processing circuit 15 in the node apparatus shown in Fig. 5.

In other words, the output variable amplifier 51 or the variable optical attenuator 52 is provided corresponding to each wavelength to be generated and inserted by the laser diode 50, and the output powers of the output variable amplifier 51 and the variable attenuator 52 are set by a SV signal generated by the SV processing circuit 15.

By this setting, a deviation of a sending level of an optical signal to be inserted by the node apparatus, from the received power level informed from the node apparatus with a path connected can be eliminated. As described above, by means of controlling the adjustment of the optical power of an inserting signal by the optical control signal (OSC), flexibility is increased in introducing a network, or in adding nodes, and operation can be simplified. In addition, a low-cost network can be constructed.

In accordance with the present invention, substantially the same received optical powers are obtained even if any optical paths are connected between node apparatuses in a ringed optical network. By this effect, optical signals can be received stably, and the number of node apparatuses that can be introduced into the ring can be increased. Furthermore, the required optical output power for an optical amplifier in a node apparatus can be reduced, achieving a reduction in cost and size.

While illustrative and presently preferred embodiments of the present invention have been described in detail herein, it is to be understood that the inventive concepts may be otherwise variously embodied and employed and that the appended claims are intended to be construed to include such variations except insofar as limited by the prior art.

## Claims

1. An optical ring network system comprising:
a plurality of node apparatuses each sending out wavelength division multiplexed optical signals;
an optical transmission line connecting the plurality of node apparatuses in a ring; and
at least one optical amplifier disposed on the optical transmission line;
wherein the sending power of optical signals to be inserted at each of the plurality of node apparatuses is set such that the received levels of the optical signals sent out from the plurality of node apparatuses and received at the input of the optical amplifier become equal.

2. An optical ring network system comprising:
a plurality of node apparatuses each sending out wavelength division multiplexed optical signals;
an optical transmission line connecting the plurality of node apparatuses in a ring; and
an optical amplifier included in any of the plurality of node apparatuses, the optical amplifier being connected to the optical transmission line;
wherein the sending power of optical signals to be inserted at each of the plurality of node apparatuses is set such that the received levels of the optical signals sent out from the plurality of node apparatuses and received at the input of the optical amplifier become equal.

3. The optical ring network system according to claim 2, whereineach of the plurality of node apparatuses includes control means for calculating a deviation and controlling the sending power of optical signals so that the calculated deviation becomes zero, the calculated deviation being the difference between the received optical signal level of a corresponding node apparatus connected via a path to the each of the plurality of node apparatuses, notified from the corresponding node apparatus, and the sending out level of the optical signal sent out.

4. A node apparatus in an optical ring network which include a plurality of node apparatuses connected in a ring via an optical transmission line, the optical ring network having an optical relay amplifier disposed on a segment between the adjacent node apparatuses,
wherein the node apparatus comprises means for setting the sending power of optical signals to be inserted at each of the plurality of node apparatuses such that the receiving levels of the optical signals sent out from the plurality of node apparatuses and received at the input of the optical amplifier become equal.

5. A node apparatus in an optical ring network which include a plurality of node apparatuses connected in a ring via an optical transmission line, at least one of the plurality of node apparatuses having an optical relay amplifier connected to the optical transmission line,
wherein the node apparatus comprises means for setting the sending power of optical signals to be inserted at each of the plurality of node apparatuses such that the receiving levels of the optical signals sent out from the plurality of node apparatuses and received at the input of the optical amplifier become equal.

6. The node apparatus according to claim 4 or 5, wherein the wavelength of the wavelength division multiplexed optical signal is fixed.

7. The node apparatus according to claim 4 or 5, wherein the wavelength of the wavelength division multiplexed optical signal is adaptively variable.

8. The node apparatus according to claim 5, further comprising control means for calculating a deviation and controlling the sending power of optical signals so that the calculated deviation becomes zero, the calculated deviation being the difference between the received optical signal level of a corresponding node apparatus connected via a path thereto, notified from the corresponding node apparatus, and the sending out level of the optical signal sent out.
